# EUROPÄISCHE PATENTANMELDUNG

(11) **EP 1 950 547 A1**
(43) Veröffentlichungstag der Anmeldung: **30.07.2008**
(21) Anmeldenummer: 07001912.0
(22) Anmeldetag: 29.01.2007
(51) Int. Cl.: G01M 3/28, G01M 3/18, G01M 3/22

(54) **Vorrichtung zur Überwachung einer Dichtheit einer Leitung**

(71) Anmelder: SIEMENS AKTIENGESELLSCHAFT, 80333 München (DE)
(72) Erfinder: Ackenhausen, Harald, 46537 Dinslaken (DE); Berghaus, Roland, 45479 Mülheim an der Ruhr (DE); Böttcher, Andreas, Dr., 40882 Ratingen (DE); Ertle, Volker, 45529 Hattingen (DE); Pahl, Andreas, 40589 Düsseldorf (DE); Pohlers, Thomas-Dirk, 40883 Ratingen (DE); Rauh, Horst Uwe, Dr., 45309 Essen (DE); Simon, Gerhard, 45239 Essen (DE); Stöcker, Helmut, 45772 Marl (DE); Warnack, Dieter, Dr., 45478 Mülheim a.d. Ruhr (DE)

(57) **Zusammenfassung**

Die Erfindung betrifft eine Vorrichtung (2, 42, 46, 60) zur Überwachung einer Dichtheit einer Leitung (4), mit einer Ummantelung (12, 40, 62), die die Leitung (4) und einen zumindest teilweise um die Leitung (4) geführten Hohlraum (16, 28, 58, 66, 68) umschließt, und mit einem Sensor (20) zur Überwachung des Hohlraums (16, 28, 58, 66, 68). Um kostengünstig und zuverlässig eine Vielzahl von Leitungen überwachen zu können, wird vorgeschlagen, dass der Sensor (20) im Hohlraum (16, 28, 58, 66, 68) angeordnet ist und der Hohlraum (16, 28, 58, 66, 68) druckdicht von der Ummantelung (12, 40, 62) umschlossen ist.

## Beschreibung

Die Erfindung betrifft eine Vorrichtung zur Überwachung einer Dichtheit einer Leitung, mit einer Ummantelung, die die Leitung und einen zumindest teilweise um die Leitung geführten Hohlraum umschließt, und mit einem Sensor zur Überwachung des Hohlraums.

Bei einer Kraftwerksanlage wird Brennstoff durch Leitungen von einem Versorgungspunkt zu einem oder mehreren Brennern transportiert. So sind beispielsweise Gasturbinen mit einer Anzahl von Brennern ausgestattet, die z.B. ringförmig an einer Brennkammer angeordnet sind. Die Brenner sind über ein Rohrleitungssystem mit einer Brennstoffversorgung verbunden, wobei jeder Brenner über eine sogenannte Stichleitung an eine ringartige Verteilerleitung angeschlossen ist, die wiederum mit einer zentralen Versorgungsleitung verbunden ist.

Insbesondere bei einem solchen Rohrleitungssystem mit einer Vielzahl von Leitungen, die Vibrationen ausgesetzt sind, ist die Gefahr einer Undichtigkeit groß. Zum Erkennen von Undichtigkeiten ist es bekannt, potentielle Leckstellen zu kapseln und über Öffnungen in der Kapselung Probeluft abzusaugen und sie einem Sensor zur Überwachung auf Brennstoff zuzuführen. Bei weitläufigen Anlagen oder einer Vielzahl von zu überwachenden Leitungen ist der Aufwand, eine Leckstelle in einer Leitung auf diese Weise zügig zu erkennen, insbesondere bei gasförmigem Brennstoff, enorm groß. Einer von kleineren Leckstellen hervorgerufenen Gefahr kann bei großen Räumen durch intensive Belüftung entgegengewirkt werden.

Es ist die Aufgabe der vorliegenden Erfindung, eine Vorrichtung zur Überwachung einer Dichtheit einer Leitung anzugeben, die kostengünstig ist und mit der eine Leckstelle in einem Leitungssystem zuverlässig erkannt werden kann.

Diese Aufgabe wird durch eine Vorrichtung der Eingangs genannten Art gelöst, bei der der Sensor im Hohlraum angeordnet ist und der Hohlraum druckdicht von der Ummantelung umschlossen ist. Auf eine Zuleitung von Probeluft vom Hohlraum zum Sensor kann verzichtet werden, wodurch die Vorrichtung einfach gehalten werden kann. Durch die Ummantelung kann der zu überwachende Raum auf ein Minimum reduziert werden, so dass bereits eine geringe Undichtigkeit vom Sensor erkannt werden kann. Mit Hilfe der Druckdichtigkeit der Ummantelung kann eine Leckstelle zuverlässig erkannt werden, beispielsweise durch einen Konzentrations- oder Druckanstieg im Hohlraum.

Die Leitung kann eine jegliche Medienführung sein, wie eine Rohrleitung, ein Schlauch, ein Wellrohrschlauch, oder ein vom Medium durchströmtes Element, wie ein Ventil, ein Sensor oder andere Bauteile. Zweckmäßigerweise ist die Ummantelung um eine potentielle Leckstelle herum geführt, beispielsweise um einen Verbinder zum Verbinden zweier Elemente der Leitung, wie Rohrelemente, Gehäuseteile oder Schlauchstücke. Eine Auswerteeinheit zum Auswerten der Signale des Sensors kann au-ßerhalb der Vorrichtung angeordnet und beispielsweise mit dem Sensor verdrahtet oder Bestandteil der Vorrichtung sein. Die Auswerteeinheit kann einen Signalgeber umfassen, beispielsweise einen akustischen oder optischen Signalgeber zur Erkennung durch Bedienpersonal.

Die Erfindung ist besonders vorteilhaft anwendbar bei einer Brennstoffzuleitung einer Gasturbine, da dort auf diese Weise eine Vielzahl von Leitungen einfach überwacht werden können.

Ist der Sensor ein Konzentrationssensor, beispielsweise zur Messung einer Brenngaskonzentration, so kann ein Gaseintritt in die Ummantelung und insbesondere die Stärke eines Gaseintritts direkt und zuverlässig erkannt werden.

Gemäß einer bevorzugten Ausführungsform der Erfindung ist der Sensor ein Drucksensor. Es kann eine Druckveränderung im Hohlraum direkt und zuverlässig erkannt werden. Eine Undichtigkeit der Leitung im Bereich der Ummantelung und damit ein Medieneintritt aus der Leitung in den Hohlraum führt - aufgrund der druckdichten Ausführung der Ummantelung und je nach Druckverhältnissen in der Leitung und im Hohlraum - in der Regel zu einem Druckanstieg im Hohlraum. Dieser kann mit dem Drucksensor erfasst werden und es kann mittels eines geeigneten Signals auf den Druckanstieg aufmerksam gemacht werden.

Eine besonders hohe Sicherheit bei der Ermittlung einer Undichtigkeit durch einen Drucksensor kann erreicht werden, wenn der Hohlraum mit einem Überdruck versehen ist, der höher als ein Umgebungsdruck der Ummantelung ist. Sinkt der Überdruck im Hohlraum, so ist das ein Indiz, dass die Ummantelung selbst undicht ist und somit ein Einströmen von Medium aus der Leitung nicht mehr zuverlässig erkennbar ist. Ein Defekt der Ummantelung kann erkannt und die Ummantelung kann ausgetauscht werden. Steigt der Druck hingegen, kann von einer Undichtigkeit der Leitung ausgegangen werden. Auf diese Weise kann sowohl die Dichtigkeit der Leitung als auch der Ummantelung überwacht werden.

Zu einer Überwachung der Ummantelung umfasst die Vorrichtung zweckmäßigerweise eine Auswerteeinheit, die zu einem Auslösen eines Alarms bei einem durch den Sensor gemessenen Druckabfall vorbereitet ist. Der Druckabfall kann als Transient gemessen werden. Einfacher ist die Messung des Druckabfalls innerhalb des Hohlraums und ein Auslösen des Alarms, wenn der Druck unter einen Schwellwert fällt, der insbesondere in einem Speicher der Auswerteeinheit hinterlegt ist.

In einer weiteren Ausgestaltung der Erfindung ist der Hohlraum mit einem Überdruck versehen, der höher als ein Leitungsdruck in der Leitung ist. Bei einer Undichtigkeit der Leitung dringt Medium aus dem Hohlraum in die Leitung ein, so dass ein Medienaustritt aus der Leitung wirksam vermieden werden kann. Durch den Übertritt von Medium vom Hohlraum in die Leitung verringert sich der Druck im Hohlraum. Dieser Druckabfall kann vom Sensor erkannt werden, so dass das Leck behoben werden kann bevor Medium aus der Leitung nach einem Druckausgleich in den Hohlraum eindringt. Auf diese Weise kann sowohl das Leck zuverlässig erkannt, als auch ein Medienaustritt aus der Leitung wirksam vermieden werden, was insbesondere bei giftigen Medien besonders vorteilhaft ist.

Vorteilhafterweise ist der Hohlraum mit einem Inertgas befüllt. Hierdurch kann eine unerwünschte Reaktion des Mediums aus der Leitung mit dem Gas im Hohlraum vermieden werden. Ist der Druck im Hohlraum höher als in der Leitung, so dringt nur das Inertgas in die Leitung ein, so dass beispielsweise eine spätere Verbrennung des Leitungsmediums nicht gestört wird. Auch kann ein unerwünschtes Eintreten von Oxidans in beispielsweise ein Brenngas in der Leitung vermieden werden. Ist umgekehrt der Druck in der Leitung höher als im Hohlraum kann die Bildung eines zündfähigen Gasgemischs im Hohlraum vermieden werden, oder die Bildung eines Gases, das den Sensor angreift und in seiner Funktion beeinträchtigt.

Gerade bei einem aufwendigen Leitungssystem mit einer Vielzahl von Rohren oder langen Leitungen ist eine Verkabelung einer Anzahl von Sensoren mit einem nachteiligen Aufwand verbunden. Dieser Nachteil kann umgangen werden, wenn der Sensor ein Funksensor zur drahtlosen Übertragung seiner Messergebnisse an einen Empfänger ist. Mehrere Sensoren können an einen zentralen Empfänger senden, der die Messergebnisse einer zentralen Auswerteeinheit weitergibt, so dass ein hoher Verkabelungsaufwand und auch eine Störanfälligkeit umgangen werden kann.

Eine eigene Energieversorgung des Senders durch eine Leitung oder einen Energiespeicher kann unterbleiben, wenn der Sensor einen RFID-Sender (Radio Frequency Identification) aufweist. Diese bekannten Sender sind dazu vorgesehen, aus einstrahlender elektromagnetischer Strahlung, beispielsweise Radiowellen, genügend Energie verwendbar zu absorbieren, um selber eine Kennung senden zu können. Auf diese Weise können eine Vielzahl von RFID-Sendern mittels eines einzigen Energiesenders mit Energie versorgt und die Sensoren somit abgefragt werden, ohne dass es einer eigenen Energiequelle für jeden der Sensoren bedarf.

Vorteilhafterweise ist eine Sendekennung des RFID-Senders von einem Messergebnis des Sensors abhängig. Die Sendekennung kann die Antwort des RFID-Senders auf eine auf den Sender abgestimmte Energieeinstrahlung sein. Aus der Antwort des Senders kann somit das Messergebnis des Senders ausgelesen und die Leitung zuverlässig überwacht werden.

Die Ummantelung kann ein Schlauch sein, der über die Leitung gezogen wird und sich druckdicht an die Leitung schmiegt, beispielsweise durch ein Erhitzen und ein dadurch bedingtes Zusammenziehen des Schlauchs. Es kann eine flexible Anpassung der Ummantelung an die Leitung, an Elemente, wie beispielsweise ein Ventil oder an einen Verbinder von Leitungselementen erreicht werden. Der im Inneren des Schlauchs angeordnete Sensor kann hierbei an der Leitung anliegen, und der Hohlraum kann auf ein Minimum begrenzt werden.

In einer bevorzugten Ausgestaltung der Erfindung ist die Ummantelung Teil eines Verbinders zum Verbinden zweier Elemente der Leitung, wobei der Verbinder selbst Teil der Vorrichtung sein kann. Die Vorrichtung kann besonders zuverlässig, insbesondere besonders druckdicht ausgeführt werden, und eine Verbindungsstelle des Verbinders kann besonders zuverlässig überwacht werden. Der Verbinder kann ein Rohrverbinder sein, ein Flansch, eine Schraubverbindung, ein Steckfitting, eine Quetschverbindung oder dergleichen. Ein Element kann ein Rohr, ein Schlauch, ein Funktionsbauteil oder dergleichen sein.

Vorteilhafterweise ist der Hohlraum innerhalb eines die Verbindung der beiden Elemente bewirkenden Haltemittels angeordnet. Das Haltemittel ist hierbei zweckmäßigerweise ein einen Dichtungsspalt bildendes Bauteil, beispielsweise zwei aneinander geführte Flansche oder zwei eine Verklemmung bildende Elemente, so dass der Hohlraum Teil des - ggf. aufgeweiteten - Spalts ist. Durch den Spalt strömendes Medium gelangt - wenn der Hohlraum vollständig um die Leitung geführt ist zwangsweise - in den Hohlraum und kann dort durch den Sensor erkannt werden. Der Hohlraum ist vorteilhafterweise durch zumindest ein Vertiefung im Haltemittel gebildet, so dass genügend Raum für den Sensor bleibt.

In einer weiteren Erfindungsvariante wird vorgeschlagen, dass der Verbinder eine erste und eine zweite um die Leitung geführte Dichtung aufweist und der Hohlraum zwischen den Dichtungen angeordnet ist. Auf diese Weise kann die Druckdichtheit der Ummantelung einfach hergestellt werden. Zusätzlich wird durch die zweite Dichtung eine hohe Sicherheit der Dichtheit der Verbindung erreicht. Hierfür ist die zweite Dichtung zweckmäßigerweise so angeordnet, dass ein Leckstrom eines aus der Leitung unerwünscht austretenden Mediums beide Dichtungen überwinden muss, um aus dem Verbinder auszutreten.

Die Erfindung wird anhand von Ausführungsbeispielen näher erläutert, die in den Zeichnungen dargestellt sind. Es zeigen:
- FIG 1: eine Vorrichtung zur Überwachung einer Dichtheit einer Leitung mit einer um eine Flanschdichtung geführten festen Ummantelung,
- FIG 2: einen in einem Flansch integrierten Hohlraum zwischen zwei Dichtungen mit einem Sensor,
- FIG 3: ein Rohrdichtung mit einem Hohlraum mit einem Sensor innerhalb einer Dichtfläche und
- FIG 4: eine Vorrichtung zur Überwachung einer Dichtheit mit einem Schrumpfschlauch als Ummantelung um eine Rohrdichtung.

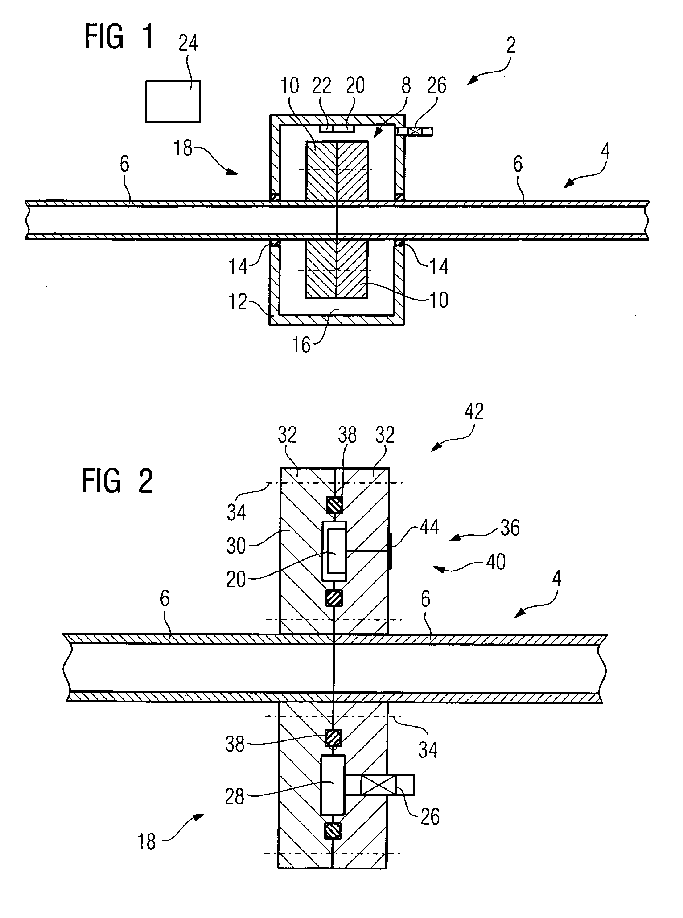

FIG 1 zeigt schematisch eine Vorrichtung 2 zur Überwachung einer Dichtheit einer Leitung 4, die eine Brennstoffzuleitung einer Gasturbine ist. Die Leitung 4 umfasst zwei als Rohr ausgeführte Elemente 6, die durch einen als Flanschverbindung ausgeführten Verbinder 8 dichtend aufeinander gepresst sind.

Zur Abdichtung umfasst der Flanschverbinder zwei Flansche 10, die an die Rohre angeschweißt sind.

Um den Verbinder 8 ist eine starre Ummantelung 12 in Form eines zylinderförmigen Kastens angebracht, der mit Hilfe von Dichtungen 14 um die Rohre geklemmt ist, so dass ein um die Leitung 4 und den Verbinder 8 umlaufender Hohlraum 16 druckdicht gegen eine Umgebung 18 abgeschlossen ist. Innerhalb des Hohlraums 16 ist ein Sensor 20 an der Ummantelung 12 befestigt, der als Konzentrationssensor ausgeführt ist und zur Erkennung von Brenngas und dessen Konzentration ausgeführt ist.

Der Sensor 20 ist mit einem RFID-Sender 22 ausgestattet, der mit einer Auswerteeinheit 24 kommuniziert, die in der Nähe der Vorrichtung 2 ist und einen Sender und einen Empfänger umfasst. Die Auswerteeinheit 24 kann mit einem weiteren Rechner zur Auswertung der Daten des Sensors 20 und Steuerung von Prozessen verbunden sein oder diese Auswertung selbst vornehmen.

Während des Betriebs der Gasturbine strömt Brenngas durch die Leitung 4. Die Auswerteeinheit 24 fragt im voreingestellten Zeitintervall rhythmisch den Sensor 20 auf seine Ergebnisse ab, indem der Sender der Auswerteeinheit 24 ein hochfrequentes elektromagnetisches Feld aussendet. Dieses wird von einer Spule des RFID-Senders 22 teilweise absorbiert und in elektrische Energie umgewandelt, die von einem Kondensator gespeichert und einem Chip im RFID-Sender 22 zur Verfügung gestellt wird. Der Chip liest das gerade vorliegende Messergebnis des Sensors 20 aus und gibt dieses codiert an den RFID-Sender 22, der es in Form eines hochfrequenten Signals aussendet. Der Empfänger der Auswerteeinheit 24 empfängt das Signal und leitet es zur Auswertung weiter.

Bei einer Undichtigkeit der Leitung 4 strömt etwas Brenngas durch einen Spalt zwischen den Flanschen 10, dringt in den Hohlraum 16 ein und wird vom Sensor 20 erkannt. Ein entsprechendes, die Konzentration des Brenngases im Hohlraum 16 anzeigendes Signal wird an die Auswerteeinheit 24 gesendet, die bei einer Brenngaskonzentration über einem Schwellwert einen Alarm ausgibt.

In einer alternativen Ausführung ist der Sensor 20 ein Drucksensor. Strömt Brenngas in den druckdicht abgeschlossenen Hohlraum 16, steigt dort der Druck an. Bei Ansteigen des Drucks über einen Schwellwert gibt die Auswerteeinheit 24 einen Alarm aus.

In einer weiteren Ausführung ist der Hohlraum 16 mittels eines Ventils 26 mit einem Überdruck versehen, der über dem Druck der Umgebung 18 und unter dem Druck des Brenngases in der Leitung 4 liegt. Fällt der Druck innerhalb der Ummantelung 12 ab, so ist das ein Zeichen, dass diese undicht ist. Steigt der Druck an, so ist das ein Zeichen, dass der Verbinder 8 undicht ist. In beiden Fällen gibt die Auswerteeinheit 24 einen Alarm aus, wenn der Druck unter bzw. über einen vorgegebenen Schwellwert steigt bzw. fällt.

Ein zusätzlicher Vorteil kann hierbei dadurch erreicht werden, dass eine Undichtigkeit der Leitung 4 auch dann erkannt werden kann, wenn die Leitung 4 bzw. die Gasturbine nicht in Betrieb ist, also noch nicht oder nicht mehr mit Druck beaufschlagt ist. In diesem Fall ist der Druck innerhalb der Ummantelung 12 höher als der Druck in der Leitung 4, so dass eine Undichtigkeit in der Leitung 4 im Bereich der Ummantelung 12 zu einem Druckabfall im Hohlraum 16 führt, der entsprechend erkannt wird.

Ferner ist es möglich, den Druck im Hohlraum 16 über den Brenngasdruck in der Leitung 4 zu heben, zweckmäßigerweise durch Einfüllen eines Inertgases durch das Ventil 26 in den Hohlraum 16. Bei einem Leck in der Leitung 4 innerhalb der Ummantelung 12 sinkt der Druck im Hohlraum 16 ab, da das Inertgas durch das Leck in die Leitung 4 teilweise entweicht, so dass ein Alarm ausgegeben wird. Hierbei wird ein Austritt von Brenngas aus der Leitung 4 zuverlässig verhindert. Ein Schaden der Ummantelung 12 wird gleichfalls durch einen Druckabfall erkannt.

FIG 2 zeigt schematisch eine Flanschverbindung mit einem innen liegenden Hohlraum 28. Die nachfolgende Beschreibung beschränkt sich im Wesentlichen auf die Unterschiede zum Ausführungsbeispiel aus FIG 1, auf das bezüglich gleichbleibender Merkmale und Funktionen verwiesen wird. Im Wesentlichen gleichbleibende Bauteile sind grundsätzlich mit den gleichen Bezugszeichen beziffert.

Die Flanschverbindung stellt einen Verbinder 30 dar, dessen Flansche 32 mit innen und außen liegenden Schraubverbindungen 34 ein Haltemittel 36 bilden, das die als Rohre ausgeführten Elemente 6 abdichtend zusammenhält. Innerhalb der Flansche 32 sind eine innere und eine äußere Dichtung 38 in Form von O-Ringen angeordnet, die beide die Leitung 4 umlaufen und das Leitungsinnere stufenweise, also seriell zweifach, gegen die Umgebung 18 abdichten. Hierzu ist die äußere Dichtung 38 radial außerhalb der inneren Dichtung 38 vollständig um diese herumgeführt.

Die Flansche 32 selbst bilden eine Ummantelung 40 einer Vorrichtung 42 zur Überwachung einer Dichtheit der Leitung 4, in die der die Leitung 4 vollständig umschließende Hohlraum 28 eingearbeitet ist, der durch die beiden zusammengefügten Flansche 32 gebildet wird. In den Hohlraum 28 ist ein Sensor 20 eingefügt, der wie zu FIG 1 beschrieben ausgeführt ist und eine durch einen Flansch 32 nach außen geführte Antenne 44 aufweist. Diese dient zum Senden und Empfangen von Signalen und zur Absorbtion der elektromagnetischen Strahlung zur Energieerzeugung. Alternativ kann anstelle der Antenne 44 ein gesamter RFID-Sender außerhalb eines der Flansche 32 angeordnet und über einen abgeschirmten Draht mit dem Sensor 20 verbunden sein. Durch ein Ventil 26 kann der Hohlraum 28 mit einem Überdruck versehen werden, beispielsweise wie zu FIG 1 beschrieben.

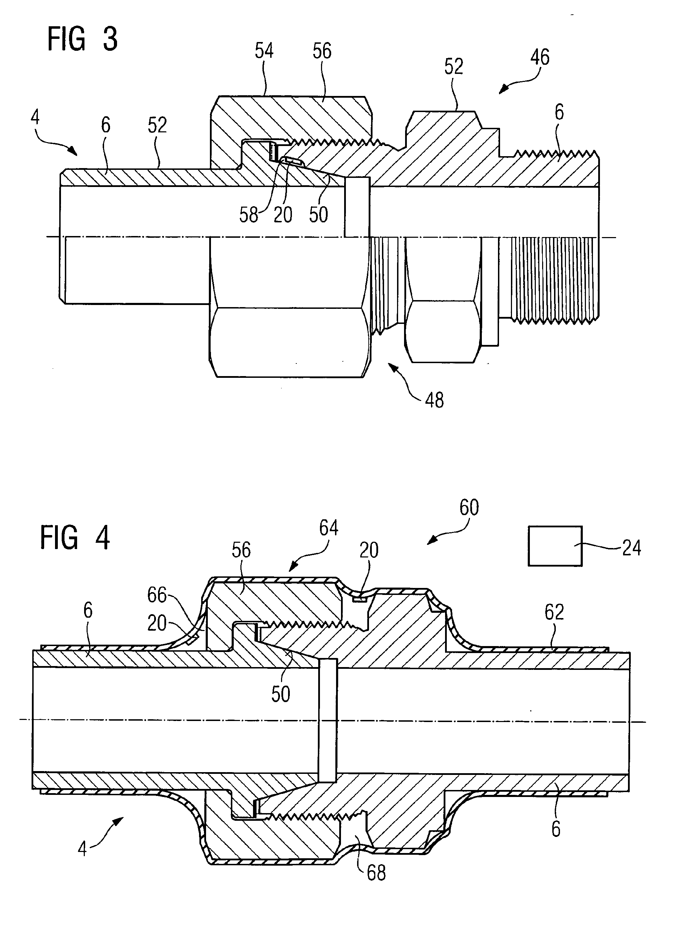

In FIG 3 ist eine Vorrichtung 46 zur Überwachung einer Dichtheit einer Leitung 4 dargestellt, die eine Klemmverbindung 48 zum dichten Zusammenfügen von Elementen 6 aufweist. Die Klemmung 48 wird über zwei schräge Dichtflächen 50 zweier Elemente 52 eines Verbinders 54 erreicht, die durch eine Spannmutter 56 aufeinander gepresst werden. In eine der Dichtflächen 50 ist eine umlaufende Ausnehmung eingearbeitet, die einen Hohlraum 58 bildet und einen Sensor 20 aufnimmt, der mit einer nicht dargestellten Antenne verbunden sein kann. Gas, das aus der Leitung 4 entweicht muss zwangsweise entlang der Dichtflächen 50 strömen und so in den Hohlraum 58 gelangen, in dem es durch den Sensor 20 erkannt wird.

Ein weiteres Ausführungsbeispiel mit einer Vorrichtung 60 zur Überwachung einer Dichtheit einer Leitung 4 mit einer als Schrumpfschlauch ausgeführten Ummantelung 62 ist in FIG 4 dargestellt. Die Ummantelung 62 ist vollständig um einen wie zu FIG 3 beschriebenen Verbinder 64 geführt und liegt druckdicht an den Elementen 6 der Leitung 4 an. Hierzu kann der Schrumpfschlauch mit einer dichtenden inneren Beschichtung versehen sein. An der Innenseite der Ummantelung 62 sind zwei Sensoren 20 angebracht, die drahtlos mit einer Auswerteeinheit 24 kommunizieren, beispielsweise wie zu FIG 1 beschrieben. Um eine zuverlässige Erkennung eines Lecks zu gewährleisten, sind die Sensoren 20 in Axialrichtung der Leitung 4 beidseitig der Dichtfläche 50 angeordnet und jeweils in einem eigenen Hohlraum 66, 68 angeordnet, die durch ein druckdichtes Anliegen der Ummantelung 62 an der Spannmutter 56 druckdicht voneinander getrennt sind.

## Patentansprüche

1. Vorrichtung (2, 42, 46, 60) zur Überwachung einer Dichtheit einer Leitung (4), mit einer Ummantelung (12, 40, 62), die die Leitung (4) und einen zumindest teilweise um die Leitung (4) geführten Hohlraum (16, 28, 58, 66, 68) umschließt, und mit einem Sensor (20) zur Überwachung des Hohlraums (16, 28, 58, 66, 68), **dadurch gekennzeichnet, dass** der Sensor (20) im Hohlraum (16, 28, 58, 66, 68) angeordnet ist und der Hohlraum (16, 28, 58, 66, 68) druckdicht von der Ummantelung (12, 40, 62) umschlossen ist.

2. Vorrichtung (2, 42, 46, 60) nach Anspruch 1,
**dadurch gekennzeichnet, dass** die Leitung (4) eine Brennstoffzuleitung einer Gasturbine ist.

3. Vorrichtung (2, 46, 60) nach Anspruch 1 oder 2,
**dadurch gekennzeichnet, dass** der Sensor (20) ein Konzentrationssensor ist.

4. Vorrichtung (2, 42, 46, 60) nach einem der vorhergehenden Ansprüche, **dadurch gekennzeichnet, dass** der Sensor (20) ein Drucksensor ist.

5. Vorrichtung (2, 42, 46) nach einem der vorhergehenden Ansprüche, **dadurch gekennzeichnet, dass** der Hohlraum (16, 28, 58) mit einem Überdruck versehen ist, der höher als ein Umgebungsdruck der Ummantelung (12, 40) ist.

6. Vorrichtung (2, 42, 46) nach einem der vorhergehenden Ansprüche, **gekennzeichnet durch** eine Auswerteeinheit (24), die zu einem Auslösen eines Alarms bei einem **durch** den Sensor (20) gemessenen Druckabfall vorbereitet ist.

7. Vorrichtung (2, 42, 46) nach einem der vorhergehenden Ansprüche, **dadurch gekennzeichnet, dass** der Hohlraum (16, 28, 58) mit einem Überdruck versehen ist, der höher als ein Leitungsdruck in der Leitung (4).

8. Vorrichtung (2, 42, 46) nach einem der vorhergehenden Ansprüche, **dadurch gekennzeichnet, dass** der Hohlraum (16, 28, 58) mit einem Inertgas befüllt ist.

9. Vorrichtung (2, 42, 46, 60) nach einem der vorhergehenden Ansprüche, **dadurch gekennzeichnet, dass** der Sensor (20) ein Funksensor zur drahtlosen Übertragung seiner Messergebnisse an einen Empfänger ist.

10. Vorrichtung (2, 42, 46, 60) nach einem der vorhergehenden Ansprüche, **dadurch gekennzeichnet, dass** der Sensor (20) einen RFID-Sender (22) aufweist.

11. Vorrichtung (2, 42, 46, 60) nach Anspruch 10,
**dadurch gekennzeichnet, dass** eine Sendekennung des RFID-Senders (22) von einem Messergebnis des Sensors (20) abhängig ist.

12. Vorrichtung (60) nach einem der vorhergehenden Ansprüche,
**dadurch gekennzeichnet, dass** die Ummantelung (62) einen Schlauch aufweist, der über die Leitung (4) gezogen ist und sich druckdicht an die Leitung (4) schmiegt.

13. Vorrichtung (42, 46) nach einem der vorhergehenden Ansprüche, **dadurch gekennzeichnet, dass** die Ummantelung (62) Teil eines Verbinders (8, 30, 54, 64) zum Verbinden zweier Elemente (6) der Leitung (4) ist.

14. Vorrichtung (42, 46) nach Anspruch 13,
**dadurch gekennzeichnet, dass** der Hohlraum (28, 58) innerhalb eines die Verbindung der beiden Elemente (6) bewirkenden Haltemittels (36) angeordnet ist.

15. Vorrichtung (42) nach Anspruch 14,
**dadurch gekennzeichnet, dass** der Verbinder (30) eine erste und eine zweite um die Leitung (4) geführten Dichtung (38) aufweist und der Hohlraum (28) zwischen den Dichtungen (38) angeordnet ist.

16. Vorrichtung (42) nach Anspruch 15,
**dadurch gekennzeichnet, dass** die Dichtungen (38) Flanschdichtungen sind.
